# EUROPEAN PATENT APPLICATION

(11) **EP 1 179 948 A2**
(43) Date of publication of application: **13.02.2002**
(21) Application number: 01118034.6
(22) Date of filing: 25.07.2001
(51) Int. Cl.: H04M 1/725, H04Q 7/22

(54) **Method of selectively storing display message in a mobile telephone**

(30) Priority: 10.08.2000 KR 2000046294
(71) Applicant: SAMSUNG ELECTRONICS CO., LTD., Suwon-City, Kyungki-do (KR)
(72) Inventor: Youn, Yeong-Seong, Seoul (KR)
(74) Representative: Grünecker, Kinkeldey, Stockmair & Schwanhäusser Anwaltssozietät

(57) **Abstract**

A method of selectively storing a display message in a mobile telephone is disclosed. The method comprises the steps of: displaying in an optical display unit of the mobile telephone a short message which is received in the mobile telephone; selecting a desired part of a character string from the displayed short message; and storing in a memory of the mobile telephone the selected character string. According to the invention, the reuse and re-display of the received information is made easy while effective utilization can be obtained of the memory capacity of the mobile telephone.

## Description

The present invention relates generally to a mobile telephone, and more particularly, to a method of selectively storing some portion of a character string of a message displayed in an optical display unit of a mobile telephone.

A typical cellular mobile telephone system provides a transceiving function of short message information to a mobile telephone via a message center connected with a mobile switching center, so that a message of a predetermined length can be exchanged between telephones or between a telephone and a web. To accomplish this, the mobile telephone provides a function to receive and display the short message in the optical display unit and either store or cancel the whole short message by using a key pad.

In practice, users may want to selectively process and store only a portion of the information from the messages received and displayed in the mobile telephone. For example, the received short message provided via a data service can include a name, contact information, or a telephone number.

However, re-displaying the received short message by the user is not considered in the mobile telephone of the related art. The short message displayed in the optical display unit of the mobile telephone cannot be selectively stored and thus information is easily forgotten. The only alternative to this is to store the entire short message. However, there is a problem storing all the messages, since the mobile telephone has a memory with limited capacity.

It is, therefore, the object of the present invention to provide a method by which a user can selectively store part of a displayed character string in a mobile telephone.

To achieve the above object, a method of selectively storing a displayed message in a mobile telephone is provided in accordance with the present invention. The method comprises the steps of: displaying in an optical display unit of the mobile telephone, a short message which is received in the mobile telephone; selecting a desired part of a character string from the displayed short message; and storing the selected character string in the mobile telephone memory.

The above object will be more apparent when taken in conjunction with the accompanying drawings, in which:
FIG. 1 illustrates the internal structure of a mobile telephone according to an embodiment of the present invention;
FIG. 2 is a flow chart illustrating the selective storage operation of a display message according to an embodiment of the present invention; and
FIG. 3 is a detailed flow chart setting forth steps S200 and S300 of FIG. 2.

Hereinafter, in describing the operating principle of a preferred embodiment of the present invention in reference to the appended drawings, detailed descriptions about related known functions or structures will be omitted in the event that the detailed description thereof may unnecessarily obscure the substance of the invention.

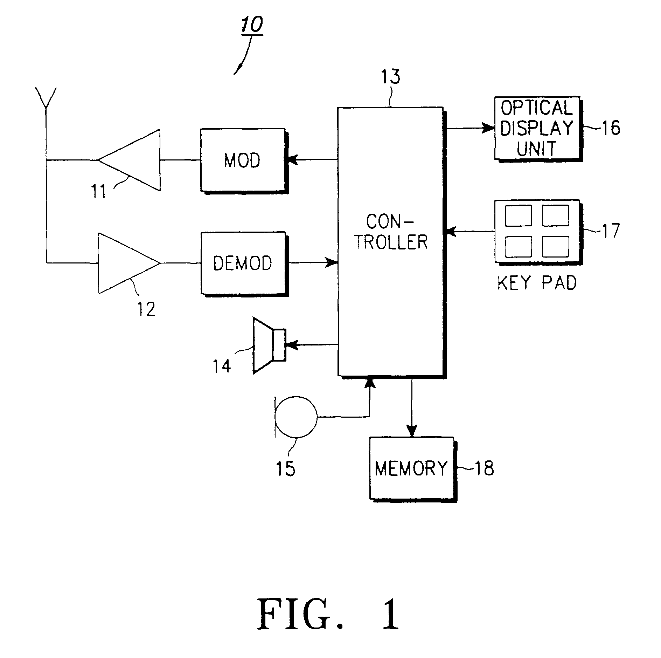

The present invention provides a method by which the user can selectively store part of a displayed character string in a mobile telephone. FIG. 1 illustrates the internal structure of a mobile telephone according to an embodiment of the invention.

Referring to FIG. 1, the mobile telephone 10 for the purpose of transceiving a signal with a mobile telephone system including a base station, a mobile switching center and a message center the mobile telephone comprises a transmitter 11 including a modulator and a transmitting amplifier, a receiver 12 including a receiving amplifier and a demodulator, and a controller 13 for controlling the transceived signal. The controller 13 includes a digital signal processor, a microprocessor and other circuits and controls. The transmitter 11 and the receiver 12 modulate and demodulate signals, respectively, and are included so that the mobile telephone user can perform a number of mobile communication services, including performing a conversation or transceiving a short message with another user. The user performs audio conversation by using a speaker 14 and a microphone 15 of the mobile telephone, and is provided with a number of data services through an optical display unit 16 and a key pad 17.

If the signal received through the receiver 12 includes a short message or the data service includes a short message, the corresponding short message is displayed in the optical display unit 16. Here, the optical display unit 16 can be realized as a liquid crystal display (LCD) for example, which includes a buffer of a small capacity to temporarily store the short message. In the present invention, the user can operate the key pad to select a part of the character string from the short message displayed in the optical display unit 16, in which the selected character string is read from the buffer to be stored in a memory 18. The memory 18 can be segmented into areas to store various system parameters or operating programs for operating the mobile telephone, and an area to store the character string.

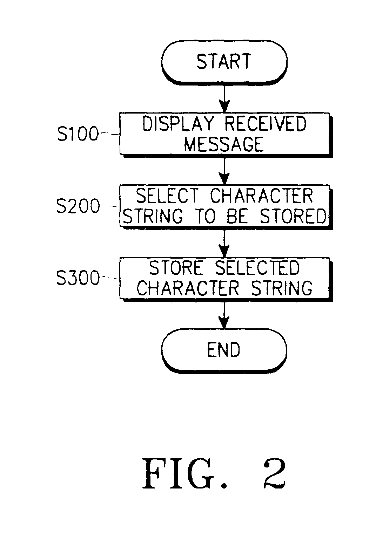

FIG. 2 is a flow chart illustrating the selective storage operation of a display message according to an embodiment of the present invention. As illustrated in FIG. 2, when the short message is displayed in the optical display unit 16 after being received in the mobile telephone 10 in step S100, the user selects a desired part of the character string from the displayed short message using the key pad 17 in step S200, and the controller 13 of the mobile telephone 10 stores the selected character string in the allocated storage area of the memory 18 in step S300.

In one embodiment of the present invention, the allocated storage area can be constructed as a circular queue. The circular queue is composed of a number of small storage areas that can store a number of character strings wherein the size and the amount of each of the storage areas can be defined in designing the mobile telephone or by the user. The memory 18 is constructed as a non-volatile memory so that powering off the mobile telephone may not cancel the stored character string.

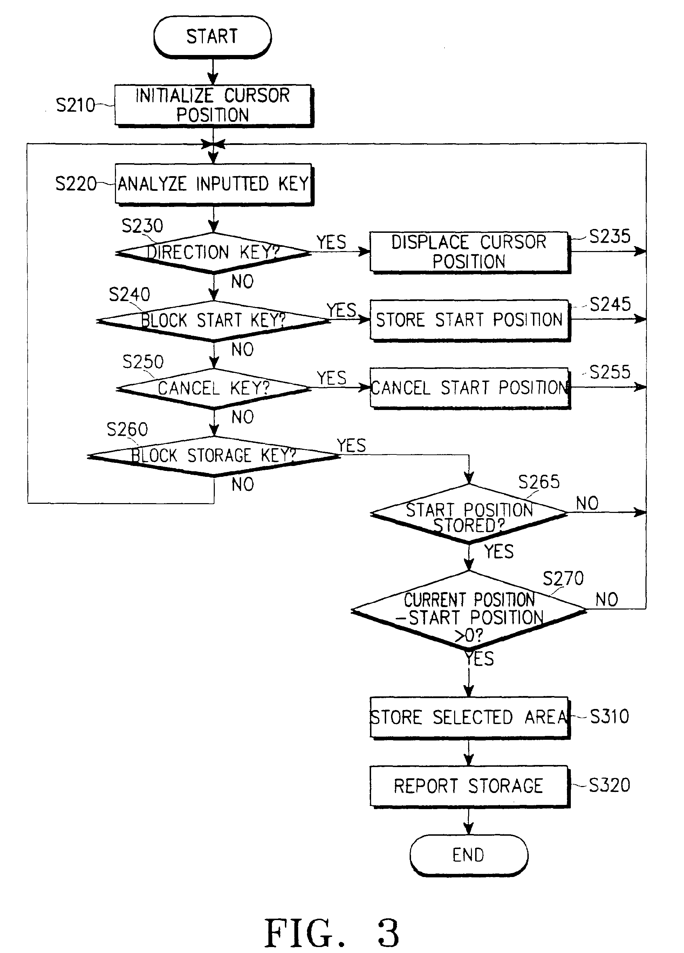

FIG. 3 is a detailed flow chart illustrating steps S200 and S300 in FIG. 2 in which such an operation is performed by the controller 13.

Referring to FIG. 3, when the short message is displayed in the optical display unit 16 after being received in the mobile telephone 10, the controller 13 locates a cursor at the first letter in the uppermost left of the display message in step 210. This operation is defined as "initialization of the cursor position". When the initialization of the cursor position is completed, the controller waits for a key input from the user. When the user inputs a key by using the key pad 17, the controller 13 analyzes the corresponding inputted key in step S220.

If the inputted key is a direction key of up/down/right/left in step S230, the controller 13 displaces the position of the cursor corresponding to the inputted direction key in step S235 and waits then for the next key input. For example, number keys in the key pad 17 can be utilized to realize the direction key such as 2 for the up, 8 for the down, 6 for the right and 4 for the left.

If the inputted key is a block start key in step S240, the controller 13 stores the current cursor position as the start position of the character string to be stored at step S245 and waits for the next key input. The block start key can be "RCL" key, "SEARCH" key, etc. in the key pad 17.

If the inputted key is a cancel key in step S250, the controller 13 cancels the previously stored start position and waits for the next key input in step S255. The cancel key can be "CLR" key, "Cancel" key, etc. in the key pad.

If the inputted key is a block storage key in step S260, the controller 13 confirms if the start position is stored at step S265 while regarding the current cursor position as the last position of the character string to be stored, and if the start position is stored, confirms if the current cursor position is after the start position in step S270. If the start position is not stored, the process returns to step S220. The process will also return to step S220 if the current cursor position is not after the start position. Such an operation is performed because the character string to be stored cannot be specified if the current cursor position (last position) is in the start position. If the current cursor position is after the start position, the controller 13 reads the character string from the stored start position to the current cursor position in the whole message displayed in the optical display unit 16 from the buffer, stores the same in the allocated area of the memory 18 in step S310, and reports to the user that the storage of the selected character string is completed visually or audibly in step S320. The block storage key can be "STO" key, "SAVE" key, etc. in the key pad 17.

The character string stored like this can be read from the memory 18 upon request from the user to be re-displayed in the optical display unit 16 or used in the transmission of the short message by the user.

According to an embodiment of the present invention which is operated as described in detail hereinbefore, part of the character string of the received short message can be chosen for selective storage so that the reuse and re-display of the received information is made easy, while only a necessary small amount of information is stored, effectively utilizing the memory capacity of the mobile telephone, which has a drawback in storing information of a large capacity.

## Claims

1. A method of selectively storing a display message in a mobile telephone, said method comprising the steps of:
displaying in an optical display unit of the mobile telephone a short message which is received in the mobile telephone;
selecting a desired part of a character string from the displayed short message; and
storing in a memory of the mobile telephone the selected character.

2. The method of selectively storing a display message in a mobile telephone according to claim 1, wherein said step of selecting comprises the steps of:
locating a cursor at the first letter of the displayed short message;
displacing the cursor to designate a start position of the character string to be stored;
displacing the cursor to designate a last position of the character string to be stored; and
reading the character string from the start position to the last position from a buffer of the optical display unit.

3. The method of selectively storing a display message in a mobile telephone according to claim 1 or 2, wherein said step of storing the character string comprises the steps of:
storing the read character string in a previously allocated storage area of the mobile telephone; and
reporting to a user that a storage is completed.

4. The method of selectively storing a display message in a mobile telephone according to claim 3, wherein the allocated storage area is constructed as a circular queue including a number of storage areas, wherein each of the storage areas has a previously defined length and can store one character string.

5. The method of selectively storing a display message in a mobile telephone according to one of the claims 1 to 4, wherein the memory is a non-volatile memory.

6. A mobile telephone comprising means that are adapted for performing the method according to any one of the claims 1 to 5.
